# EUROPÄISCHE PATENTSCHRIFT

(11) **EP 3 245 567 B1**
(45) Veröffentlichungstag und Bekanntmachung des Hinweises auf die Patenterteilung: **29.07.2020**
(21) Anmeldenummer: 15820517.9
(22) Anmeldetag: 21.12.2015
(51) Int. Cl.: G05B 19/042, B23K 26/38, B23K 26/70

(54) **VERFAHREN ZUM AKTUALISIEREN VON DATEN EINER MATERIALBEARBEITUNGSMASCHINE SOWIE ZUGEHÖRIGE MATERIALBEARBEITUNGSMASCHINE UND AUSTAUSCHBARE MASCHINENKOMPONENTE**
METHOD FOR UPDATING DATA OF A MATERIAL PROCESSING MACHINE AND ASSOCIATED MATERIAL PROCESSING MACHINE AND INTERCHANGEABLE MACHINE COMPONENTS
PROCÉDÉ D'ACTUALISATION DE DONNÉES D'UNE MACHINE DE TRAITEMENT DE MATÉRIAUX ET MACHINE DE TRAITEMENT DE MATÉRIAUX ASSOCIÉE ET COMPOSANTS DE MACHINE INTERCHANGEABLES

(30) Priorität: 12.01.2015 DE 102015200263
(43) Veröffentlichungstag der Anmeldung: 22.11.2017
(73) Patentinhaber: Trumpf Werkzeugmaschinen GmbH + Co. KG, 71254 Ditzingen (DE)
(72) Erfinder: WEICK, Jürgen-Michael, 71679 Asperg (DE)
(74) Vertreter: Kohler Schmid Möbus Patentanwälte
(86) Internationale Anmeldenummer: PCT/EP2015/080861
(87) Internationale Veröffentlichungsnummer: WO 2016/113084

(56) Entgegenhaltungen:
- DE-A1-102005 032 075
- DE-A1-102011 078 359

## Beschreibung

Die Erfindung betrifft ein Verfahren zum Aktualisieren von Daten einer Materialbearbeitungsmaschine (z.B. Laserbearbeitungsmaschine, Stanzmaschine etc.) gemäß Oberbegriff von Anspruch 1 sowie eine austauschbare Bearbeitungs- oder Sensor-Maschinenkomponente gemäß Oberbegriff von Anspruch 5 zum Einbau in die Materialbearbeitungsmaschine mit einer elektronischen Speichereinheit, in der auslesbare Informationen gespeichert sind, und eine zum Durchführen des Aktualisierungsverfahrens geeignete Materialbearbeitungsmaschine.

Ein derartiges Verfahren, Bauteil und Materialbearbeitungsmaschine sind beispielsweise aus der DE 10 2011 078 359 A1 bekannt geworden.

Das aus der DE 10 2011 078 359 A1 bekannte Verfahren zum Betrieb einer Lasermaterialbearbeitungsmaschine weist folgende Verfahrensschritte auf:
a. Einbau eines optischen Elements, das einen Transponder aufweist, in einen Laserbearbeitungskopf der Lasermaterialbearbeitungsmaschine,
b. Auslesen zumindest eines Teils der in dem Transponder betreffend das optische Element gespeicherten Information,
c. Analyse der ausgelesenen Information durch eine Steuerung der Lasermaterialbearbeitungsmaschine.
Dadurch ist es der Lasermaterialbearbeitungsmaschine zum einen möglich, zu bestimmen, ob das eingebaute optische Element für die bevorstehende Lasermaterialbearbeitung überhaupt geeignet ist und ob das eingebaute optische Element für die entsprechende Lasermaterialbearbeitungsmaschine überhaupt zugelassen ist. Außerdem können in dem Transponder Informationen gespeichert sein, die es der Lasermaterialbearbeitungsmaschine erlauben, den Lasermaterialbearbeitungsprozess so einzustellen, dass eine optimierte Materialbearbeitung durchgeführt werden kann. Als Information betreffend das optische Element kann zumindest eine der folgenden Informationen ausgelesen werden: Materialnummer, Seriennummer, Hersteller, Produktionsdatum, Chargennummer, Rohmaterial, Emissivität, Inbetriebnahmedatum, Transmission für eine Prüfwellenlänge.

Aus der WO 2013/000700 A1 ist ein optisches Element mit einem angebrachten Transponder bekannt, auf dem Informationen betreffend das optische Element gespeichert sind. Nach Einbau des optischen Elements in eine Laserbearbeitungsmaschine werden die Informationen ausgelesen und von einer Steuerung der Laserbearbeitungsmaschine analysiert. Bei den gespeicherten Informationen handelt es sich um Materialnummer, Seriennummer, Hersteller, Produktionsdatum, Chargennummer, Rohmaterial, Inbetriebnahmedatum und Transmission für eine Prüfwellenlänge des optischen Elements. Im Fall einer Linse als optischem Element können im Transponder Informationen über die Transmission der Linse gespeichert sein, die dann an eine Linsensensorik zur Überwachung der Linse weitergeleitet werden.

Auch aus der DE 10 2004 048 099 A1 ist eine zum Einbau in ein Mikroskop bestimmte Optik- oder Optikanbaukomponente mit einem elektronischen Speicherbaustein bekannt, auf dem neben Daten zur Komponentenidentifikation auch Komponenteneigenschaften abgespeichert sind, wie zum Beispiel Seriennummern, spezielle Messprotokolle wie optische Spektren, Abweichungen von Spezifikationsvorgaben etc., die Aussagen über die Optikkomponente oder das mit der Optikanbaukomponente versehene Optikbauteil erlauben. Durch Einlesen der gespeicherten Daten in eine Steuereinheit des Mikroskops kann die Messgenauigkeit gesteigert werden.

Weiterhin ist auch aus der DE 100 55 534 A1 ein Objektiv mit einem Transponder bekannt, in dem der Korrektionsgrad, die Abgleichlänge und/oder der Farbgang, Auslieferungsdaten, Chargennummern und/oder Wartungs- oder Reparaturdaten des Objektivs gespeichert sind.

Aus der EP 2 540 432 A1 ist schließlich noch eine Laserbearbeitungsmaschine bekannt, bei der an einer austauschbaren Komponente eine Codierung angebracht ist, welche der Komponente eineindeutig zugeordnet ist. Diese eineindeutige Zuordnung der Codierung ermöglicht es, alle relevanten Kenndaten der austauschbaren Komponente aus einer Datenbank der Laserbearbeitungsmaschine auszulesen, so dass keine Kenndaten auf der austauschbaren Komponente selbst gespeichert werden müssen.

Wenn eine Materialbearbeitungsmaschine oder eine z.B. aus DE 195 07 401 A1 oder DE 10 2011 007 176 A1 bekannte Überwachungsvorrichtung (Sensoreinheit) für eine solche Maschine austauschbare Bauteile aufweist, so muss bei einem Tausch der Bauteile sichergestellt sein, dass korrekte Bauteile eingebaut werden. Außerdem ist es oft notwendig, dass der Maschine die genauen Eigenschaften der eingewechselten Bauteile (z.B. im Falle einer Linse deren Brennweite) mitgeteilt werden. Dies kann durch manuelle Eingaben eines Maschinenbedieners erfolgen; es ist jedoch sicherer, wenn die Bauteileigenschaften direkt am Bauteil gespeichert und von der Maschinensteuerung oder der Überwachungsvorrichtung eingelesen werden.

Während der Einsatzdauer von Materialbearbeitungsmaschinen oder Überwachungsvorrichtungen, die sich oft über mehrere Jahre erstreckt, können sich aus neu gewonnenen Erfahrungen Änderungen von Maschinenbetriebsdaten, Technologiedaten, Sensorik-Grenzwerten usw. ergeben. Solche geänderten Daten werden üblicherweise durch Updates der Steuerungssoftware der Maschine oder der Steuerungs- bzw. Auswertungssoftware der Überwachungsvorrichtung aktualisiert. Für diese Updates muss entweder ein Fernzugriff auf die Maschinensteuerung möglich sein, oder es müssen Datenträger zum Einsatzort der Maschine gebracht werden.

Der vorliegenden Erfindung stellt sich die Aufgabe, das Aktualisieren von Daten einer Materialbearbeitungsmaschine für den Maschinennutzer möglichst einfach und leicht zu gestalten, insbesondere ohne dass hierfür zusätzliche Bedieneingriffe durch den Benutzer erforderlich sind.

Diese Aufgabe wird erfindungsgemäß durch ein Verfahren zum Aktualisieren von Daten einer Materialbearbeitungsmaschine mit den Merkmalen von Anspruch 1 gelöst. Die austauschbare Maschinenkomponente kann durch ein einzelnes Bauteil (z.B. Optikelement, Sensor oder Schneiddüse) oder eine ganze Bauteilgruppe (z.B. Bearbeitungskopf, Überwachungsvorrichtung) gebildet sein.

Erfindungsgemäß wird eine austauschbare Bearbeitungs- oder Sensor-Maschinenkomponente, insbesondere eine sowieso regelmäßig getauschte Maschinenkomponente, als Träger für Update-Informationen genutzt. Dazu werden in einer elektronischen Speichereinheit der Maschinenkomponente, z.B. in einem RFID-Transponder, neben den üblicherweise gespeicherten Daten (Hersteller, Bauteilnummer, Produktionscharge, Bauteileigenschaften) auch bauteilfremde Aktualisierungsdaten, wie z.B. geänderte Maschinendaten, Prozessparameter oder Sensorik-Grenzwerte, gespeichert. Erfindungsgemäß werden also nicht nur Daten gespeichert, die die Maschinenkomponente selbst kennzeichnen, sondern auch Daten, die nichts oder nur indirekt etwas mit dieser Maschinenkomponente zu tun haben. Auf diese Weise können Erfahrungswerte, die beim Einsatz der Materialbearbeitungsmaschine, insbesondere in der ersten Zeit des Einsatzes neuer Bauteile oder einer neuen Maschine, schneller und/oder einfacher berücksichtigt werden.

Die Bearbeitungs- oder Sensor-Maschinenkomponente wird in den Bearbeitungsstrang, also im Falle einer Lasermaschine in den optischen Pfad des Laserstrahls, oder in einen Überwachungsstrang der Materialbearbeitungsmaschine, z.B. in eine Abstandssensorik oder in einen Strahlengang einer Optiküberwachung, eingebaut. Bei der Bearbeitungs- oder Sensor-Maschinenkomponente kann es sich um ein Maschinenersatzteil handeln, das bei der Materialbearbeitung einem Verschleiß unterworfen ist und daher in regelmäßigen Abständen getauscht werden muss.

Bei den aus dem Stand der Technik bekannten Verfahren kennzeichnen die auf der Maschinenkomponente gespeicherten Daten Eigenschaften der Komponente (z.B. die Brennweite einer Linse oder die Transmission der Linse für eine Prüfwellenlänge), auf deren Basis die Maschinensteuerung die Materialbearbeitung (z.B. den Abstand des Bearbeitungskopfs vom Werkstück in Abhängigkeit von der Linsenbrennweite) oder die Überwachung der Komponente (z.B. den Transmissionswert für den Gutzustand der Komponente) anpasst. Dagegen sind bei dem erfindungsgemäßen Verfahren die Aktualisierungsdaten unabhängig von den individuellen Eigenschaften der eingewechselten Maschinenkomponente: So kann beispielsweise ein geändertes Programm zur Steuerung des Einstechens auf einer Speichereinheit an einem Schutzglas einer Laserbearbeitungsmaschine gespeichert sein, wobei das Einstechprogramm von den individuellen Eigenschaften des Schutzglases unbeeinflusst ist.
Die Erfindung lässt sich allgemein an Materialbearbeitungsmaschinen anwenden: Ein tauschbares mechanisches Trennwerkzeug oder eine tauschbare optische Komponente an einer Bearbeitungsmaschine könnte einen Transponder aufweisen, auf dem z.B. Zeitintervalle für Wartungsarbeiten an der Maschine gespeichert sind. Wird das Trennwerkzeug bzw. die optische Komponente getauscht, so werden diese Zeitangaben von der Maschinensteuerung ausgelesen und mit den bisher in der Maschinensteuerung hinterlegten Daten verglichen und ggf. geändert. So können durch den Einsatz der Maschine gewonnene Erfahrungswerte über häufiger oder weniger häufig als angenommen notwendige Wartungsarbeiten in den weiteren Betrieb der Maschine einfließen.

Erfindungsgemäß weisen die Aktualisierungsdaten aktualisierte Steuerungsdaten für eine Maschinensteuerung der Materialbearbeitungsmaschine, Wartungsdaten oder aktualisierte Grenzwerte für eine Auswertungs- oder Überwachungsvorrichtung der Materialbearbeitungsmaschine auf. Haben sich beispielsweise Schneiddaten der Maschinensteuerung einer Laserschneidmaschine, wie z.B. maximale Vorschubgeschwindigkeit bei einer bestimmten Laserleistung, Eckradien an zu schneidenden Konturen bei bestimmten Werkstückdicken, Parameter für das Einstechen etc., als nicht optimal erwiesen, so können die neuen Schneiddaten auf der als nächstes zu tauschenden Maschinenkomponente gespeichert werden, so dass die Aktualisierung der Schneiddaten automatisch beim Tausch der Maschinenkomponente erfolgt, ohne dass der Anwender zusätzlich einen Software-Update durchführen muss. Oder hat sich beispielsweise gezeigt, dass sich die Verschmutzung eines Schutzglases im Bearbeitungskopf weniger kritisch auf die Schneideigenschaften einer Laserbearbeitungsmaschine auswirkt als zunächst angenommen, so können die Grenzwerte einer Streulichtsensorik (Überwachungsvorrichtung für das Schutzglas), bei denen der Maschinenbediener zum Tausch des Schutzglases aufgefordert wird, erhöht werden. Die neuen Grenzwerte sind direkt auf einem neuen Schutzglas gespeichert, so dass die Aktualisierung der Grenzwerte automatisch beim Tausch des Schutzglases erfolgt, ohne dass der Anwender zusätzlich einen Software-Update an der Überwachungsvorrichtung bzw. der Maschinensteuerung durchführen muss. Auf diese Weise sorgt ein regelmäßig getauschtes Ersatzteil für aktuelle Daten der Maschinensteuerung und/oder der Auswertungs- oder Überwachungsvorrichtung.

Die Aktualisierungsdaten können von einer Schnittstelle in der Materialbearbeitungsmaschine ausgelesen und an eine Funktionseinheit der Maschine oder eine Maschinensteuerung zur Aktualisierung der Daten weitergeleitet werden. Beispielsweise werden die auf einem Schutzglas gespeicherte Aktualisierungsdaten der Maschinensteuerung von einer Schutzglas-Überwachungsvorrichtung, in die das Schutzglas eingebaut wird, ausgelesen und an die Maschinensteuerung weitergeleitet.

Die Erfindung betrifft in einem weiteren Aspekt auch eine austauschbare Bearbeitungs- oder Sensor-Maschinenkomponente zum Einbau in eine Materialbearbeitungsmaschine, insbesondere eine Ersatzteil- oder Wechselkomponente, mit den Merkmalen von Anspruch 5. Die austauschbare Maschinenkomponente kann beispielsweise ein mechanisches Werkzeug (Stanzwerkzeug, Drehwerkzeug, Bearbeitungskopf, etc.), ein optisches Bauteil (z.B. Schutzglas oder Fokussierlinse) oder ein Prozessbauteil (z.B. Prozessgasdüse) sein.

Die Aktualisierungsdaten können beispielsweise aktualisierte Steuerungsdaten, wie z.B. geänderte Grenzwerte für die Laservorschubgeschwindigkeit oder geänderte Einstechparameter an einer Laserschneidmaschine, für die Maschinensteuerung aufweisen. Alternativ oder zusätzlich können die Aktualisierungsdaten auch aktualisierte Grenzwerte für eine Mess- oder Überwachungsvorrichtung der Materialbearbeitungsmaschine ausweisen, und zwar insbesondere für eine Überwachungsvorrichtung zur Überwachung der Funktion der tauschbaren Maschinenkomponente (z.B. Schutzglas) oder für eine Messvorrichtung (z.B. Abstandsregelung oder Fokuslagensensorik), die Messgrößen für die Funktion der Materialbearbeitungsmaschine unter Verwendung der getauschten Maschinenkomponente (z.B. Abstandssensor oder Schutzglas) ermittelt, wie es beispielsweise in der DE 10 2011 007 176 A1 beschrieben ist.

Um sicherzustellen, dass die Aktualisierungsinformationen, die in der Speichereinheit der austauschbaren Maschinenkomponente gespeichert sind, an der richtigen Materialbearbeitungsmaschine eingelesen werden, sind in der Speichereinheit vorteilhafterweise Daten gespeichert, die die Zielmaschine eindeutig identifizieren (z.B. eine Maschinennummer, Eigentümer). Dies ermöglicht eine maschinenspezifische Wertekonfigurierung und -aktualisierung.

Die Speichereinheit kann ein beliebiger auslesbarer Datenträger sein; bei besonders bevorzugten Ausführungsformen der Erfindung ist die Speichereinheit als passiver Transponder, z.B. als RFID-Transponder, ausgebildet.

Die Erfindung betrifft schließlich auch eine Materialbearbeitungsmaschine mit den Merkmalen von Anspruch 8.

Weitere Vorteile und vorteilhafte Ausgestaltungen des Gegenstands der Erfindung sind der Beschreibung, der Zeichnung und den Ansprüchen entnehmbar. Ebenso können die vorstehend genannten und die noch weiter aufgeführten Merkmale je für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung.

Es zeigen:
- Fig. 1: schematisch eine zum Durchführen des erfindungsgemäßen Aktualisierungsverfahrens geeignete Materialbearbeitungsmaschine in Form einer Laserschneidmaschine; und
- Fig. 2: schematisch eine Speichereinrichtung einer in Fig. 1 gezeigten austauschbaren Maschinenkomponente in Form eines Schutzglases.

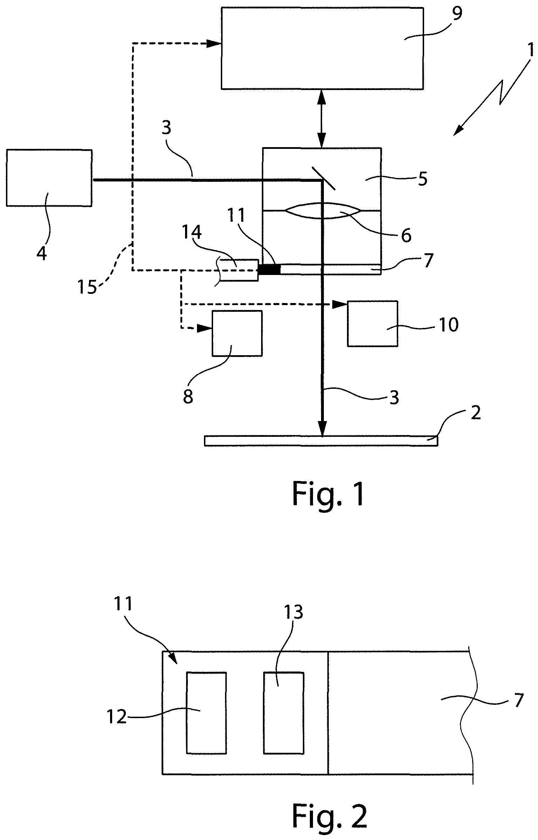

**Fig. 1** zeigt eine Laserschneidmaschine **1** zum Schneiden eines Werkstücks **2** mittels eines Laserstrahls **3.**

Die Laserschneidmaschine 1 umfasst:
- einen Laserstrahlerzeuger **4** zum Erzeugen des Laserstrahls 3,
- einen bewegbaren Laserbearbeitungskopf **5** mit einer Fokussierlinse **6,** die den Laserstrahl 3 auf das Werkstück 2 fokussiert,
- ein im Laserbearbeitungskopf 5 eingebautes, austauschbares Schutzglas **7,** das die Fokussierlinse 6 vor Verschmutzung durch den beim Laserschneiden des Werkstücks 2 auftretenden Rauch schützt und den Schneidgasdruck abfängt,
- eine Überwachungsvorrichtung **8** in Form einer Streulicht-Sensorik zum Überwachen der Verschmutzung des Schutzglases 7 durch Detektion des im und/oder am Schutzglas 7 gestreuten Laserstrahls 3, sowie
- eine Maschinensteuerung **9,** die die Bewegung des Laserbearbeitungskopfes 5 und die Laserparameter des Laserstrahlerzeugers 4 steuert.

Weiterhin ist noch eine Messvorrichtung **10,** wie z.B. eine aus der DE 10 2011 007 176 A1 bekannte Fokuslagenregelung zum Regeln der Fokuslage des Laserstrahls 3 relativ zur Oberfläche des Werkstücks 2, eine kamerabasierte Prozessüberwachungsvorrichtung oder eine Einstechsensorik zum Regeln des Einstechens des Laserstrahls 3 in das Werkstück 2, vorgesehen.

Wie in **Fig. 2** gezeigt ist, weist das Schutzglas 7 eine z.B. als RFID-Transponder ausgebildete elektronischen Speichereinheit **11** auf, in der auslesbare Informationen gespeichert sind. Diese auslesbaren Informationen enthalten sowohl Daten **12,** die das Schutzglas 7 selbst kennzeichnen (z.B. Materialnummer, Seriennummer, Hersteller, Produktionsdatum, Chargennummer, Rohmaterial, Inbetriebnahmedatum), als auch Aktualisierungsdaten **13** für die Überwachungsvorrichtung 8, die Maschinensteuerung 9 oder die Messvorrichtung 10, die sich nicht auf das Schutzglas 7 beziehen, d.h. nicht von den Eigenschaften des Schutzglases 7 abhängen.

Die vor einem Einbau des Schutzglases 7 in der Speichereinheit 11 gespeicherten Aktualisierungsdaten 13 werden nach dem Einbau des Schutzglases 7 in den Laserbearbeitungskopf 5 von einer entsprechenden Schnittstelle **14** des Laserbearbeitungskopfes 5 ausgelesen und über die gestrichelt dargestellten Verbindungsleitungen **15** an die Überwachungsvorrichtung 8, Maschinensteuerung 9 oder Messvorrichtung 10 zur Aktualisierung ihrer Daten weitergeleitet. Bei den Aktualisierungsdaten 13 kann es sich beispielsweise um aktualisierte Steuerungsdaten für die Maschinensteuerung 9 oder um aktualisierte Messgrößen, Grenzwerte oder Auswertealgorithmen für die Mess- oder Überwachungsvorrichtung 8, 10 handeln. Auf diese Weise wird das Schutzglas genutzt, um entweder aktualisierte Steuerungsprogramme, Prozessparameter, Technologietabellen, o.ä. für das Einstechen oder Laserschneiden an die Maschinensteuerung zu übertragen oder um die Software an der Mess- oder Überwachungsvorrichtung zu aktualisieren, so dass neue Messgrößen detektiert, diese Messgrößen auf veränderte Weise ausgewertet oder Grenzwerte für Regelungseingriffe in den Prozess verändert werden können.

Es sind also nicht nur Daten der Überwachungsvorrichtung 8, die mit Eigenschaften des Schutzglases 7 in Verbindung stehen (wie z.B. der anfängliche Streulicht-Messwert des neuen Schutzglases 7), in der Speichereinheit 11 des Schutzglases 7 gespeichert, sondern auch Daten, die von den Eigenschaften des individuellen Schutzglases unabhängig sind (wie z.B. ein oberer Grenzwert für die erlaubte Zunahme des Streulicht-Messwerts während des Schneidprozesses). Die Speichereinheit 11 kann alternativ oder ergänzend auch Daten für Funktionseinheiten (Maschinensteuerung 9 oder Messvorrichtung 10) der Laserschneidmaschine 1 enthalten, die mit dem Schutzglas 7 in keiner kausalen Verbindung stehen. So können in der Speichereinheit 11 beispielsweise Einstech- oder Schneiddaten gespeichert sein, die sich aufgrund der im Feldeinsatz gewonnenen Erfahrung verändern, oder verbesserte Prozessparameter (Verfahrgeschwindigkeit, Laserleistung) für das Schneiden unterschiedlich großer Radien oder für das Schneiden am Konturende.

Statt am Schutzglas 7 kann die Speichereinheit 11 auch an anderen austauschbaren Bauteilen der Laserschneidmaschine 1, wie z.B. an der Fokussierlinse 6 oder an einer Prozessgasdüse (nicht gezeigt) angeordnet sein.

## Patentansprüche

1. Verfahren zum Aktualisieren von Daten einer Materialbearbeitungsmaschine (1), wobei vor einem Einbau einer austauschbaren Bearbeitungs- oder Sensor-Maschinenkomponente (6; 7) der Materialbearbeitungsmaschine (1) in einen Bearbeitungsstrang oder einen Überwachungsstrang der Materialbearbeitungsmaschine Aktualisierungsdaten (13) für die Materialbearbeitungsmaschine (1), die nicht von Eigenschaften der Maschinenkomponente (6; 7) abhängig sind, in einer elektronischen Speichereinheit (11) der Maschinenkomponente (6; 7) gespeichert werden und wobei nach dem Einbau der Maschinenkomponente (6; 7) die gespeicherten Aktualisierungsdaten (13) von der Materialbearbeitungsmaschine (1) zur Aktualisierung ihrer Daten ausgelesen werden, **dadurch gekennzeichnet,**
**dass** die Aktualisierungsdaten (13) aktualisierte Steuerungsdaten für eine Maschinensteuerung (9) der Materialbearbeitungsmaschine (1) aufweisen und/oder dass die Aktualisierungsdaten (13) aktualisierte Messgrößen und/oder Grenzwerte und/oder Auswertealgorithmen für eine Mess- oder Überwachungsvorrichtung (8, 10) der Materialbearbeitungsmaschine (1) aufweisen.

2. Verfahren nach Anspruch 1, **dadurch gekennzeichnet, dass** die Aktualisierungsdaten (13) aktualisierte Messgrößen und/oder Grenzwerte und/oder Auswertealgorithmen für eine Überwachungsvorrichtung (8) zur Überwachung der Funktion der Maschinenkomponente (6; 7) oder für eine Messvorrichtung (10), die Messgrößen für die Funktion der Materialbearbeitungsmaschine (1) unter Verwendung der Maschinenkomponente (6; 7) ermittelt, aufweisen.

3. Verfahren nach einem der vorhergehenden Ansprüche, **dadurch gekennzeichnet, dass** die Aktualisierungsdaten (13) von einer Schnittstelle (14) der Materialbearbeitungsmaschine (1) ausgelesen und an eine Funktionseinheit (8, 10) der Materialbearbeitungsmaschine (1) oder eine Maschinensteuerung (9) zur Aktualisierung der Daten weitergeleitet werden.

4. Verfahren nach einem der vorhergehenden Ansprüche, **dadurch gekennzeichnet, dass** in der Speichereinheit (11) zusätzlich Daten gespeichert sind, die die Materialbearbeitungsmaschine (1) eindeutig identifizieren.

5. Austauschbare Bearbeitungs- oder Sensor-Maschinenkomponente (6; 7) zum Einbau in einen Bearbeitungsstrang oder einen Überwachungsstrang einer Materialbearbeitungsmaschine (1), mit einer an der Maschinenkomponente (6; 7) angeordneten elektronischen Speichereinheit (11), in der auslesbare Informationen gespeichert sind, wobei in der Speichereinheit (11) Aktualisierungsdaten (13) für die Materialbearbeitungsmaschine (1), die nicht von Eigenschaften der Maschinenkomponente (6; 7) abhängig sind, gespeichert sind,
**dadurch gekennzeichnet,**
**dass** die Aktualisierungsdaten (13) aktualisierte Steuerungsdaten für eine Maschinensteuerung (9) der Materialbearbeitungsmaschine (1) aufweisen und/oder dass die Aktualisierungsdaten (13) aktualisierte Grenzwerte für eine Mess- oder Überwachungsvorrichtung (8, 10) der Materialbearbeitungsmaschine (1) aufweisen.

6. Maschinenkomponente nach Anspruch 5, **dadurch gekennzeichnet, dass** die Aktualisierungsdaten (13) aktualisierte Grenzwerte für eine Überwachungsvorrichtung (8) zur Überwachung der Funktion der Maschinenkomponente (6; 7) oder für eine Messvorrichtung (10), die Messgrößen für die Funktion der Materialbearbeitungsmaschine (1) unter Verwendung der Maschinenkomponente (6; 7) ermittelt, aufweisen.

7. Maschinenkomponente nach Anspruch 5 oder 6, **dadurch gekennzeichnet, dass** in der Speichereinheit (11) zusätzlich Daten gespeichert sind, die die Materialbearbeitungsmaschine (1) eindeutig identifizieren.

8. Materialbearbeitungsmaschine (1) mit einer eingebauten Bearbeitungs- oder Sensor-Maschinenkomponente (6; 7) nach einem der Ansprüche 5 bis 7 und mit einer Schnittstelle (14) zum Auslesen von Aktualisierungsdaten (13), die in einer elektronischen Speichereinheit (11) der eingebauten Bearbeitungs- oder Sensor-Maschinenkomponente (6; 7) gespeichert sind, und mit einer Maschinensteuerung (9), wobei die von der Schnittstelle (14) ausgelesenen Aktualisierungsdaten (13) an eine Funktionseinheit (8,10) der Materialbearbeitungsmaschine (1) oder an die Maschinensteuerung (9) zur Aktualisierung von Daten weitergeleitet werden.

## Claims

1. Method for updating data of a material processing machine (1), wherein prior to installation of an exchangeable processing machine component or sensor machine component (6; 7) of the material processing machine (1) into a processing path or a monitoring path of the material processing machine, update data (13) for the material processing machine (1), which is not dependent on the properties of the machine component (6; 7), is stored in an electronic storage unit (11) of the machine component (6; 7) and wherein after installation of the machine component (6; 7) the stored update data (13) is read out by the material processing machine (1) for updating its data,
**characterized in that**
the update data (13) comprises updated control data for a machine control (9) of the material processing machine (1) and/or that the update data (13) comprises updated measured variables and/or limit values and/or read-out algorithms for a measuring or monitoring device (8, 10) of the material processing machine (1).

2. Method according to claim 1, **characterized in that** the update data (13) comprise updated measured variables and/or limit values and/or read-out algorithms for a monitoring device (8) for monitoring the function of the machine component (6; 7) or for a measuring device (10) which determines measured variables for the function of the material processing machine (1) using the machine component (6; 7).

3. Method according to any one of the preceding claims, **characterized in that** the update data (13) is read out by an interface (14) of the material processing machine (1) and is transmitted to a function unit (8, 10) of the material processing machine (1) or a machine control (9) for updating the data.

4. Method according to any one of the preceding claims, **characterized in that** data is additionally stored in the storage unit (11), which data unambiguously identifies the material processing machine (1).

5. Exchangeable processing machine component or sensor machine component (6; 7) for installation into a processing path or a monitoring path of a material processing machine (1), comprising an electronic storage unit (11) which is arranged on the machine component (6; 7) and in which information is stored which can be read out, wherein update data (13) for the material processing machine (1) is stored in the storage unit (11), which does not depend on properties of the machine component (6; 7),
**characterized in that**
the update data (13) comprise updated control data for a machine control (9) of the material processing machine (1) and/or that the update data (13) comprise updated limit values for a measuring or monitoring device (8, 10) of the material processing machine (1).

6. Machine component according to claim 5, **characterized in that** the update data (13) comprise updated limit values for a monitoring device (8) for monitoring the function of the machine component (6; 7) or for a measuring device (10), which determines measured variables for the function of the material processing machine (1) using the machine component (6; 7).

7. Machine component according to claim 5 or 6, **characterized in that** data is additionally stored in the storage unit (11), which data unambiguously identifies the material processing machine (1).

8. Material processing machine (1) comprising an installed processing machine component or sensor machine component (6; 7) according to any one of the claims 5 to 7 and comprising an interface (14) for reading out update data (13), which is stored in an electronic storage unit (11) of the installed processing machine component or sensor machine component (6; 7), and comprising a machine control (9), wherein the update data (13) read-out by the interface (14) is transmitted to a function unit (8, 10) of the material processing machine (1) or to the machine control (9) for updating data.

## Revendications

1. Procédé de mise à jour de données d'une machine (1) d'usinage de matériaux, sachant que, préalablement à l'intégration d'un composant remplaçable (6 ; 7) d'usinage ou de détection de ladite machine (1) d'usinage de matériaux dans un segment d'usinage ou dans un segment de surveillance de ladite machine d'usinage de matériaux, des données (13) de mise à jour, dédiées à ladite machine (1) d'usinage de matériaux et non tributaires de propriétés du composant (6 ; 7) de ladite machine, sont mémorisées dans une unité électronique de mémorisation (11) dudit composant (6 ; 7) de la machine, et sachant qu'à l'issue de l'intégration dudit composant (6 ; 7) de la machine, les données mémorisées (13) de mise à jour sont lues par ladite machine (1) d'usinage de matériaux, en vue de la mise à jour de ses données,
**caractérisé par le fait**
**que** les données (13) de mise à jour comportent des données de commande mises à jour, dévolues à une commande (9) de la machine (1) d'usinage de matériaux ; et/ou par le fait que lesdites données (13) de mise à jour comportent des grandeurs de mesure et/ou des valeurs limites et/ou des algorithmes d'évaluation mis(es) à jour, affecté(e)s à un dispositif (8, 10) de mesure ou de surveillance de ladite machine (1) d'usinage de matériaux.

2. Procédé selon la revendication 1, **caractérisé par le fait que** les données (13) de mise à jour comportent des grandeurs de mesure et/ou des valeurs limites et/ou des algorithmes d'évaluation mis(es) à jour, affecté(e)s à un dispositif de surveillance (8) conçu pour surveiller la fonction du composant (6 ; 7) de la machine, ou à un dispositif de mesure (10) qui détermine des grandeurs de mesure dédiées à la fonction de la machine (1) d'usinage de matériaux, avec utilisation dudit composant (6 ; 7) de ladite machine.

3. Procédé selon l'une des revendications précédentes, **caractérisé par le fait que** les données (13) de mise à jour sont lues par un interface (14) de la machine (1) d'usinage de matériaux et sont transmises à une unité fonctionnelle (8, 10) de ladite machine (1) d'usinage de matériaux, ou à une commande (9) de ladite machine, en vue de la mise à jour des données.

4. Procédé selon l'une des revendications précédentes, **caractérisé par le fait que** des données, additionnellement mémorisées dans l'unité de mémorisation (11), identifient sans équivoque la machine (1) d'usinage de matériaux.

5. Composant remplaçable (6 ; 7) d'usinage ou de détection, voué à l'intégration dans un segment d'usinage ou dans un segment de surveillance d'une machine (1) d'usinage de matériaux, muni d'une unité électronique de mémorisation (11) qui est implantée sur ledit composant (6 ; 7) de ladite machine, et dans laquelle des informations lisibles sont mémorisées, sachant que des données (13) de mise à jour, dédiées à ladite machine (1) d'usinage de matériaux et non tributaires de propriétés du composant (6 ; 7) de ladite machine, sont mémorisées dans ladite unité de mémorisation (11),
**caractérisé par le fait**
**que** les données (13) de mise à jour comportent des données de commande mises à jour, dévolues à une commande (9) de la machine (1) d'usinage de matériaux ; et/ou par le fait que lesdites données (13) de mise à jour comportent des valeurs limites mises à jour, affectées à un dispositif (8, 10) de mesure ou de surveillance de ladite machine (1) d'usinage de matériaux.

6. Composant de machine, selon la revendication 5, **caractérisé par le fait que** les données (13) de mise à jour comportent des valeurs limites mises à jour, affectées à un dispositif de surveillance (8) conçu pour surveiller la fonction du composant (6 ; 7) de la machine, ou à un dispositif de mesure (10) qui détermine des grandeurs de mesure dédiées à la fonction de la machine (1) d'usinage de matériaux, avec utilisation dudit composant (6 ; 7) de ladite machine.

7. Composant de machine, selon la revendication 5 ou 6, **caractérisé par le fait que** des données, additionnellement mémorisées dans l'unité de mémorisation (11), identifient sans équivoque la machine (1) d'usinage de matériaux.

8. Machine (1) d'usinage de matériaux, comprenant un composant intégré d'usinage ou de détection (6 ; 7) conforme à l'une des revendications 5 à 7, un interface (14) conçu pour lire des données (13) de mise à jour mémorisées dans une unité électronique de mémorisation (11) dudit composant intégré (6; 7) d'usinage ou de détection de la machine, et une commande (9), sachant que lesdites données (13) de mise à jour, lues par ledit interface (14), sont transmises à une unité fonctionnelle (8, 10) de ladite machine (1) d'usinage de matériaux, ou à la commande (9) de ladite machine, en vue de la mise à jour de données.
